# EUROPEAN PATENT SPECIFICATION

(11) **EP 3 868 607 B1**
(45) Date of publication and mention of the grant of the patent: **04.10.2023**
(21) Application number: 19874420.3
(22) Date of filing: 14.10.2019
(51) Int. Cl.: B60Q 5/00, G05G 1/38

(54) **PEDESTRIAN ALERT DEVICE FOR ELECTRIC VEHICLE**
FUSSGÄNGERWARNVORRICHTUNG FÜR EIN ELEKTROFAHRZEUG
DISPOSITIF D'ALERTE DE PIÉTON DESTINÉ À UN VÉHICULE ÉLECTRIQUE

(30) Priority: 17.10.2018 CN 201821685350 U
(43) Date of publication of application: 25.08.2021
(73) Proprietor: Suzhou Sonavox Electronics Co., Ltd., Jiangsu 215133 (CN)
(72) Inventor: DING, Hongbing, Suzhou, Jiangsu 215133 (CN); QIAN, Kaihua, Suzhou, Jiangsu 215133 (CN); LIU, Wenwei, Suzhou, Jiangsu 215133 (CN); CHAI, Guoqiang, Suzhou, Jiangsu 215133 (CN); ZHOU, Jianming, Suzhou, Jiangsu 215133 (CN)
(74) Representative: Cabinet Bleger-Rhein-Poupon
(86) International application number: PCT/CN2019/111019
(87) International publication number: WO 2020/078316

(56) References cited:
- CN-B- 106 314 359
- CN-U- 205 344 683
- CN-U- 207 403 564
- US-A1- 2009 080 672

## Description

### Cross Reference to Related Application(s)

This application claims priority of Chinese Patent Application CN 201821685350.6 filed on October 17, 2018.

### Technical Field

The present invention relates to a pedestrian alert device for an electric vehicle.

### Background

In recent years, as the promotion of energy conservation and emission reduction, the electric vehicle industry has developed rapidly. Since electric vehicles do not have the engines of traditional fuel vehicles, they have relatively low noise when driving at low speeds, which is difficult for pedestrians to notice, thus there is a safety hazard. In a crowded and complex environment, it is easy to cause traffic accidents. Therefore, a type of pedestrian warning device for electric vehicles has developed, which can ensure that when the electric vehicle is driving at a low speed, it can remind pedestrians by simulating sound, so as to avoid the risk of traffic accidents.

In the prior art, a pedestrian warning device for an electric vehicle usually includes a sound producing mechanism such as a loudspeaker, a control unit, and an accelerator pedal mechanism. However, in the existed pedestrian warning device, the three parts, namely, the sound producing mechanism, the controller unit, and the accelerator pedal mechanism are separately arranged in different portions of the vehicle, especially the control unit and the accelerator pedal mechanism need to exchange data frequently, but they are independently arranged and far apart, and the data transmission process therebetween is complicated, the cost is extremely high, and the structure is not compact enough.

Document CN205344683U discloses a pedestrian warning system for electric automobiles which can send virtual engine sounds. Document US20090080672A1 discloses a vehicle enunciator that may be configured or attached to a vehicle, and which can adjust the sound data with regards to frequency and amplitude, respectively. Document CN106314359B discloses an electric vehicle speed-governing anti-theft controller which is composed of a remote controller carried by the driver and a speed-governing anti-theft pedal installed in the electric vehicle cab. Document CN207403564U discloses an automatic protector of brake mistiming steps, which can control the braking system to slow down, or stop if necessary, the protected vehicle.

### Summary

Aimed at the above-mentioned problems, the present invention provides a pedestrian alert device for an electric vehicle having low cost and a compact structure.

To achieve the above purpose, a technical solution employed by the present invention is:
a pedestrian alert device for an electric vehicle, comprising an accelerator pedal mechanism, a controller and a sound producing mechanism, and the controller is electrically connected to the accelerator pedal mechanism and the sound producing mechanism, respectively, and is disposed on the accelerator pedal mechanism.

In an embodiment, the accelerator pedal mechanism comprises an installation box, an installation base fixedly connected to the installation box, and an accelerator pedal disposed on the installation base, the installation box has a chamber, and the controller is disposed in the chamber of the installation box.

In an embodiment, the controller is electrically connected to the sound producing mechanism by a wire.

In an embodiment, the installation box is provided with a through-hole for the wire to pass through.

In an embodiment, the installation box is a wooden box.

In an embodiment, the sound producing mechanism comprises a housing and a loudspeaker mounted within the housing.

In an embodiment, the sound producing mechanism further comprises a grille cover for protecting the loudspeaker, and the grille cover is fixedly arranged on the housing.

In an embodiment, the housing is arranged on a bumper on a front side of the vehicle.

In an embodiment, the accelerator pedal mechanism further comprises an accelerator pedal signal conversion output device for outputting an accelerator pedal signal according to accelerator pedaling angle and strength; the controller comprises a signal processing audio device for receiving the accelerator pedal signal and processing a pre-stored audio signal to output an audio signal corresponding to a current accelerator pedaling angle and strength; the sound producing mechanism is used to emit a warning sound according to the audio signal output by the controller.

In an embodiment, the controller further comprises a storage device for storing the pre-stored audio file.

Compared with the prior art, the technical solutions employed by the present invention have the following advantages:
it can remind pedestrians by simulating sound to avoid the risk of traffic accidents and have an intuitive driving feeling for the driver when driving an electric vehicle, which can also avoid the risk of driver fatigue while increasing the driving pleasure of driving an electric vehicle; integrating the controller on the accelerator pedal mechanism facilitates data transmission between the controller and the accelerator pedal mechanism, improves efficiency, and has a lower cost and a compact structure.

### Brief Description of the Drawings

For more clearly explaining the technical solutions of the present invention, the accompanying drawings used to describe embodiments are simply introduced in the following. Apparently, the below described drawings merely show a part of the embodiments of the present invention, and those skilled in the art can obtain other drawings according to the accompanying drawings without creative work.
Figure 1 is a schematic structural diagram of a pedestrian alert device for an electric vehicle according to an embodiment of the present invention.
Figure 2 is an exploded schematic diagram of the accelerator pedal mechanism and the controller in Figure 1.

Wherein
1 - accelerator pedal mechanism; 11 - installation box; 110 - through-hole; 12 - installation base; 13 - accelerator pedal; 2 - controller; 3 - sound producing mechanism; 31 - housing; 32 - grille cover; 4 - wire.

### Detailed Description of Exemplary Embodiments

In the following, the preferable embodiments of the present invention are explained in detail combining with the accompanying drawings so that the advantages and features of the present invention can be easily understood by the skilled persons in the art.

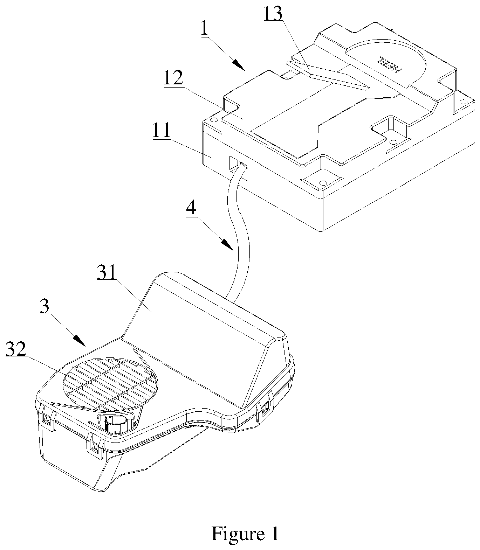

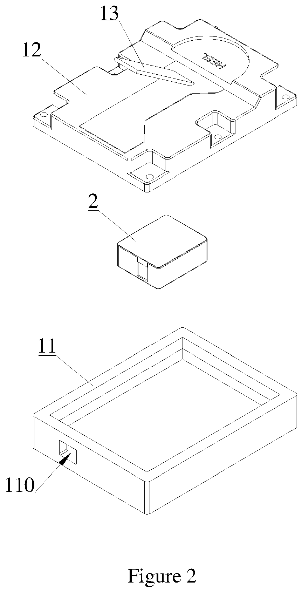

This embodiment aims to provide a pedestrian alert device for an electric vehicle, which can simulate and reproduce car sounds (such as the engine sound of a traditional fuel vehicle) to increase the driving pleasure of the driver when driving an electric vehicle and avoid fatigue driving, and at the same time, it serves as a warning to remind pedestrians around to pay attention to avoidance when at low speeds. Referring to Figure 1 and Figure 2, the pedestrian alert device for an electric vehicle, comprises an accelerator pedal mechanism 1, a controller 2 (not shown in Figure 1) and a sound producing mechanism 3. The controller 2 is electrically connected to the accelerator pedal mechanism 1 and the sound producing mechanism 3, respectively, and the controller 2 is disposed on the accelerator pedal mechanism 1. The controller 2 is installed on the bottom of the vehicle compartment along with the accelerator pedal mechanism 1, and the sound producing mechanism 3 is installed outside the vehicle, preferably on the bumper on the front side of the vehicle.

Referring to Figure 2, the accelerator pedal mechanism 1 comprises an installation box 11, an installation base 12 fixedly connected to the installation box 11, and an accelerator pedal 13 disposed on the installation base 12, the installation box 11 has a chamber, and the controller 2 is disposed in the chamber of the installation box 11. Specifically, an upper end of the installation box 11 is open, the installation base 12 is fixedly arranged on the upper end of the installation box 11 to close the controller 2 in the installation box 11, and the accelerator pedal 13 is arranged on the upper surface of the installation base 12. The installation base 12 is preferably a wooden box. The accelerator pedal mechanism 1 further comprises an accelerator pedal signal conversion output device for outputting an accelerator pedal signal according to accelerator pedaling angle and strength; the controller 2 comprises a signal processing audio device for receiving the accelerator pedal signal and processing a pre-stored audio signal to output an audio signal corresponding to the current accelerator pedaling angle and strength; the loudspeaker of the sound producing mechanism 3 emits a warning sound according to the audio signal output by the controller 2. Further, the controller 2 further comprises a storage device, and the pre-stored audio file is stored in the storage device.

The controller 2 is electrically connected to the sound producing mechanism 3 by a wire 4. The installation box 11 is provided with a through-hole 110 for the wire 4 to pass through, and the through-hole 110 is opened on a sidewall of the installation box 11.

The sound producing mechanism 3 comprises a housing 31 and a loudspeaker mounted within the housing 31 (not shown in Figure 1). The sound producing mechanism 3 further comprises a grille cover 32 for protecting the loudspeaker, the grille cover 32 is fixedly arranged on the housing 31, and the housing 31 is arranged on the bumper on the front side of the vehicle. The grille cover 32 has a plurality of evenly distributed vents, the vents are rectangular holes formed by intersecting ribs, which protect the loudspeaker in the housing 31 while facilitating the sound transmission of the loudspeaker, especially for protecting the fragile paper cones of the loudspeaker.

## Claims

1. A pedestrian alert device for an electric vehicle, comprising an accelerator pedal mechanism (1), a controller (2), and a sound producing mechanism (3), is **characterized in that**, the controller (2) is electrically connected to the accelerator pedal mechanism (1) and the sound producing mechanism (3), respectively, and is disposed on the accelerator pedal mechanism (1).

2. The pedestrian alert device according to claim 1, is **characterized in that**, the accelerator pedal mechanism (1) comprises an installation box (11), an installation base (12) fixedly connected to the installation box (11), and an accelerator pedal (13) disposed on the installation base (12), the installation box (11) has a chamber, and the controller (2) is disposed in the chamber of the installation box (11).

3. The pedestrian alert device according to claim 2, is **characterized in that**, the controller (2) is electrically connected to the sound producing mechanism (3) by a wire (4).

4. The pedestrian alert device according to claim 3, is **characterized in that**, the installation box (11) is provided with a through-hole (110) for the wire (4) to pass through.

5. The pedestrian alert device according to claim 2, is **characterized in that**, the installation box (11) is a wooden box.

6. The pedestrian alert device according to any one of the preceding claims, is **characterized in that**, the sound producing mechanism (3) comprises a housing (31) and a loudspeaker mounted within the housing.

7. The pedestrian alert device according to claim 6, is **characterized in that**, the sound producing mechanism (3) further comprises a grille cover (32) for protecting the loudspeaker, and the grille cover (32) is fixedly arranged on the housing (31).

8. The pedestrian alert device according to claim 6, is **characterized in that**, the housing (31) is arranged on a bumper on a front side of the vehicle.

9. The pedestrian alert device according to any one of the preceding claims, is **characterized in that**, the accelerator pedal mechanism (1) further comprises an accelerator pedal signal conversion output device for outputting an accelerator pedal signal according to accelerator pedaling angle and strength; the controller (2) comprises a signal processing audio device for receiving the accelerator pedal signal and processing a pre-stored audio signal to output an audio signal corresponding to a current accelerator pedaling angle and strength; the sound producing mechanism (3) is used to emit a warning sound according to the audio signal output by the controller (2).

10. The pedestrian alert device according to claim 9, is **characterized in that**, the controller (2) further comprises a storage device for storing the pre-stored audio file.

## Patentansprüche

1. Fußgängerwarnvorrichtung für ein Elektrofahrzeug, umfassend einen Fahrpedalmechanismus (1), eine Steuereinrichtung (2) und einen Tonerzeugungsmechanismus (3), **dadurch gekennzeichnet, dass** die Steuereinrichtung (2) jeweils mit dem Fahrpedalmechanismus (1) und dem Tonerzeugungsmechanismus (3) elektrisch verbunden ist und auf dem Fahrpedalmechanismus (1) angeordnet ist.

2. Fußgängerwarnvorrichtung nach Anspruch 1,
**dadurch gekennzeichnet, dass,** der Fahrpedalmechanismus (1) einen Einbaukasten (11), eine Einbaubasis (12), die mit dem Einbaukasten (11) fest verbunden ist, und ein Fahrpedal (13), das auf der Einbaubasis (12) angeordnet ist, umfasst, wobei der Einbaukasten (11) eine Kammer aufweist, und die Steuereinrichtung (2) in der Kammer des Einbaukastens (11) angeordnet ist.

3. Fußgängerwarnvorrichtung nach Anspruch 2,
**dadurch gekennzeichnet, dass** die Steuereinrichtung (2) durch einen Draht (4) mit dem Tonerzeugungsmechanismus (3) elektrisch verbunden ist.

4. Fußgängerwarnvorrichtung nach Anspruch 3,
**dadurch gekennzeichnet, dass** der Einbaukasten (11) mit einem Durchgangsloch (110) versehen ist, damit der Draht (4) dadurch verlaufen kann.

5. Fußgängerwarnvorrichtung nach Anspruch 2,
**dadurch gekennzeichnet, dass** der Einbaukasten (11) ein Holzkasten ist.

6. Fußgängerwarnvorrichtung nach einem der vorstehenden Ansprüche, **dadurch gekennzeichnet, dass** der Tonerzeugungsmechanismus (3) ein Gehäuse (31) und einen Lautsprecher, der innerhalb des Gehäuses montiert ist, umfasst.

7. Fußgängerwarnvorrichtung nach Anspruch 6,
**dadurch gekennzeichnet, dass** der Tonerzeugungsmechanismus (3) ferner eine Gitterabdeckung (32) zum Schützen des Lautsprechers umfasst, und die Gitterabdeckung (32) auf dem Gehäuse (31) fest positioniert ist.

8. Fußgängerwarnvorrichtung nach Anspruch 6,
**dadurch gekennzeichnet, dass** das Gehäuse (31) an einem Stoßfänger an einer Vorderseite des Fahrzeugs positioniert ist.

9. Fußgängerwarnvorrichtung nach einem der vorstehenden Ansprüche,
**dadurch gekennzeichnet, dass** der Fahrpedalmechanismus (1) ferner eine Fahrpedalsignalumwandlungsausgabevorrichtung zum Ausgeben eines Fahrpedalsignals gemäß Fahrpedalbetätigungswinkel und -stärke umfasst, die Steuereinrichtung (2) eine Signalverarbeitungsaudiovorrichtung zum Empfangen des Fahrpedalsignals und Verarbeiten eines zuvor gespeicherten Audiosignals umfasst, um ein Audiosignal auszugeben, das einem aktuellen Fahrpedalbetätigungswinkel und einer -stärke entspricht; der Tonerzeugungsmechanismus (3) verwendet wird, um einen Warnton gemäß dem Audiosignal auszusenden, das durch die Steuereinrichtung (2) ausgegeben wird.

10. Fußgängerwarnvorrichtung nach Anspruch 9,
**dadurch gekennzeichnet, dass,** die Steuereinrichtung (2) ferner eine Speichervorrichtung zum Speichern der zuvor gespeicherten Audiodatei umfasst.

## Revendications

1. Dispositif d'alerte pour piéton pour un véhicule électrique, comprenant un mécanisme de pédale d'accélérateur (1), un dispositif de commande (2), et un mécanisme de production de son (3), **caractérisé en ce que** le dispositif de commande (2) est connecté électriquement au mécanisme de pédale d'accélérateur (1) et au mécanisme de production de son (3), respectivement, et est disposé sur le mécanisme de pédale d'accélérateur (1).

2. Dispositif d'alerte pour piéton selon la revendication 1,
**caractérisé en ce que** le mécanisme de pédale d'accélérateur (1) comprend une boîte d'installation (11), une base d'installation (12) reliée de manière fixe à la boîte d'installation (11), et une pédale d'accélérateur (13) disposée sur la base d'installation (12), la boîte d'installation (11) présente une chambre, et le dispositif de commande (2) est disposé dans la chambre de la boîte d'installation (11).

3. Dispositif d'alerte pour piéton selon la revendication 2,
**caractérisé en ce que** le dispositif de commande (2) est connecté électriquement au mécanisme de production de son (3) par un fil (4).

4. Dispositif d'alerte pour piéton selon la revendication 3,
**caractérisé en ce que** la boîte d'installation (11) est pourvue d'un trou traversant (110) pour le passage du fil (4).

5. Dispositif d'alerte pour piéton selon la revendication 2,
**caractérisé en ce que** la boîte d'installation (11) est une boîte en bois.

6. Dispositif d'alerte pour piéton selon l'une quelconque des revendications précédentes, **caractérisé en ce que** le mécanisme de production de son (3) comprend un boîtier (31) et un haut-parleur monté à l'intérieur du boîtier.

7. Dispositif d'alerte pour piéton selon la revendication 6,
**caractérisé en ce que** le mécanisme de production de son (3) comprend en outre un couvercle de grille (32) permettant de protéger le haut-parleur, et le couvercle de grille (32) est agencé de manière fixe sur le boîtier (31).

8. Dispositif d'alerte pour piéton selon la revendication 6,
**caractérisé en ce que** le boîtier (31) est agencé sur un pare-chocs sur un côté avant du véhicule.

9. Dispositif d'alerte pour piéton selon l'une quelconque des revendications précédentes, **caractérisé en ce que** le mécanisme de pédale d'accélérateur (1) comprend en outre un dispositif de sortie de conversion de signal de pédale d'accélérateur permettant de délivrer un signal de pédale d'accélérateur selon l'angle et la force d'actionnement de pédale d'accélérateur ; le dispositif de commande (2) comprend un dispositif audio de traitement de signal permettant de recevoir le signal de pédale d'accélérateur et de traiter un signal audio pré-stocké pour délivrer un signal audio correspondant à un angle et une force d'actionnement de pédale d'accélérateur actuels ; le mécanisme de production de son (3) est utilisé pour émettre un son d'avertissement selon le signal audio délivré par le dispositif de commande (2).

10. Dispositif d'alerte pour piéton selon la revendication 9,
**caractérisé en ce que** le dispositif de commande (2) comprend en outre un dispositif de stockage permettant de stocker le fichier audio pré-stocké.
